# EUROPEAN PATENT APPLICATION

(11) **EP 3 530 601 A1**
(43) Date of publication of application: **28.08.2019**
(21) Application number: 19157600.8
(22) Date of filing: 15.02.2019
(51) Int. Cl.: B65G 67/24, B65G 67/04, B65G 67/02, G05D 1/02, G06T 7/73, B25J 5/00, B25J 9/16, B25J 19/02, B65G 69/28

(54) **METHODS AND SYSTEMS FOR OPERATING A MATERIAL HANDLING APPARATUS**

(30) Priority: 23.02.2018 US 201862634367 P; 28.01.2019 US 201916258975
(71) Applicant: Intelligrated Headquarters LLC, Mason, OH 45040 (US)
(72) Inventor: YUVARAJ, Karthikeyan, Morris Plains, NJ New Jersey 07950 (US)
(74) Representative: Houghton, Mark Phillip

(57) **Abstract**

Method including defining, by a processor, a first area in a three-dimensional (3D) image of a worksite, including a docked container, based on an identification of one or more sections of the docked container in the 3-D image. The first area is exterior to the docked container. Further, the method includes identifying, by the processor, one or more regions in the first area representative of one or more objects positioned exterior to the docked container. Additionally, the method includes operating, by the processor, a material handling apparatus based on one or more characteristics associated with the one or more objects.

## Description

### CROSS-REFERENCE TO RELATED APPLICATIONS

The application claims priority to U.S. Application No. 62/634,367, filed February 23, 2018, and U.S. Application No. 16/258,975, filed January 28, 2019, the contents of which are hereby incorporated by reference in their entirety.

### TECHNICAL FIELD

The present disclosure relates in general to a material handling system. More specifically, the present disclosure relates to methods and systems for operating a material handling apparatus in the material handling system.

### BACKGROUND

In worksites, such as warehouses, various operations may be performed to manage transportation and storage of articles. Usually, such operations may be performed either manually by workers, or by machines. Typically, the machines may be utilized to load and/or unload the articles on and/or from a container. Further, the machines may transport the articles to a storage location in the warehouse. Such machines may operate in an autonomous mode, where the machines may perform the aforementioned operations without manual intervention. Some examples of the machines may include, but are not limited to, a conveyor belt, a forklift machine, a robotic carton unloader, and/or the like.

For a machine to operate in the autonomous mode, the machine may perform one or more operations such as, but not limited to, identifying a location of the articles, determining a navigation path to the location of the articles, and traversing along the determined navigation path. In certain scenarios, the determined navigation path, to the identified articles, may not be clear for traversal of the machine due to presence of one or more obstacles on the navigation path. Some examples of the one or more obstacles include, but are not limited to, stray articles, humans, and/or the like. Traversing the machine along such a path may not be desirable.

### SUMMARY

One exemplary aspect of the present disclosure provides a method. The method may include defining, by a processor, a first area in a Three-Dimensional (3D) image of a worksite, including a docked container, based on an identification of one or more sections of the docked container in the 3-D image. The first area is exterior to the docked container. Further, the method may include identifying, by the processor, one or more regions in the first area representative of one or more objects positioned exterior to the docked container. Additionally, the method may include operating, by the processor, a material handling apparatus based on one or more characteristics associated with the one or more objects.

Another exemplary aspect of the present disclosure provides a material handling apparatus. The material handling apparatus may include an article manipulator. Further, the material handling apparatus may include an image-capturing device positioned on the material handling apparatus. Additionally, the material handling apparatus may include a processor communicatively coupled to the article manipulator and the image-capturing device. The processor is adapted to instruct the image-capturing device to capture a Three-Dimensional (3-D) image of a worksite comprising a docked container. Further, the processor is adapted to define a first area in the 3-D image of a worksite, comprising a docked container, based on an identification of one or more sections of the docked container in the 3-D image, wherein the first area is exterior to the docked container. Furthermore, the processor is adapted to identify one or more regions in the first area representative of one or more objects positioned exterior to the docked container. Additionally, the processor is adapted to operate the material handling apparatus based on one or more characteristics associated with the one or more objects.

Another exemplary aspect of the present disclosure provides a control system for a material handling apparatus. The control system may include an image-capturing device. Further, the control system may include a processor communicatively coupled to the image-capturing device. The processor is adapted to instruct the image-capturing device to capture a 3-D image of a worksite comprising a docked container. Further, the processor is adapted to define a first area in a 3-D image based on an identification of one or more sections of the docked container in the 3-D image, wherein the first area represents an exterior to the docked container. Additionally, the processor is adapted to identify one or more regions in the first area representative of one or more objects positioned exterior to the docked container. Furthermore, the processor is adapted to operate the material handling apparatus based on one or more characteristics associated with the one or more objects.

The above summary is provided merely for purposes of summarizing some example embodiments to provide a basic understanding of some aspects of the invention. Accordingly, it will be appreciated that the above-described exemplary embodiments are merely examples and should not be construed to narrow the scope or spirit of the invention in any way. It will be appreciated that the scope of the invention encompasses many potential exemplary embodiments in addition to those here summarized, some of which will be further described below.

### BRIEF DESCRIPTION OF THE DRAWINGS

The description of the illustrative exemplary embodiments can be read in conjunction with the accompanying figures. It will be appreciated that for simplicity and clarity of illustration, elements illustrated in the figures have not necessarily been drawn to scale. For example, the dimensions of some of the elements are exaggerated relative to other elements. Exemplary embodiments incorporating teachings of the present disclosure are shown and described with respect to the figures presented herein, in which:
FIG. 1 illustrates a schematic representation of an exemplary worksite, in accordance with one or more exemplary embodiments;
FIG. 2 illustrates a block diagram of a control system for a material handling apparatus, in accordance with one or more exemplary embodiments;
FIG. 3 illustrates a flowchart of a method for operating the material handling apparatus, in accordance with one or more exemplary embodiments;
FIG. 4 illustrates an exemplary 3-D image of the worksite, in accordance with one or more exemplary embodiments;
FIG. 5 illustrates a first group of regions identified in the exemplary 3-D image, in accordance with one or more exemplary embodiments;
FIG. 6 illustrates a first area identified in the exemplary 3-D image, in accordance with one or more exemplary embodiments;
FIG. 7 illustrates one or more regions identified in the exemplary 3-D image, in accordance with one or more exemplary embodiments;
FIG. 8 illustrates a flowchart of a method for operating the material handling apparatus, in accordance with one or more exemplary embodiments;
FIG. 9 illustrates an exemplary scenario of operating the material handling apparatus, in accordance with one or more exemplary embodiments; and
FIG. 10 illustrates a flowchart of a method for picking a plurality of articles loaded in a docked container, in accordance with one or more exemplary embodiments.

### DETAILED DESCRIPTION

Some embodiments of the present invention will now be described more fully hereinafter with reference to the accompanying drawings, in which some, but not all embodiments of the inventions are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

A material handling system may include one or more machines that may operate in tandem to perform predetermined operations in a worksite (for example, a warehouse). For example, the material handling system may include a material handling apparatus that may be adapted to unload articles from a location in the worksite and transfer the unloaded articles to another location in the worksite. For example, the material handling apparatus may pick the articles from a docked container and may place the picked articles on a conveyor for transportation purposes.

Before the material handling apparatus begins to pick the articles from the docked container, the material handling apparatus may receive a Three-Dimensional (3-D) image of the worksite. The 3-D image is captured in such a manner that the 3-D image includes an image of the docked container. Thereafter, the material handling apparatus may be adapted to identify one or more sections of the docked container. The one or more sections of the docked container may include, but are not limited to, one or more sidewalls of the docked container, a floor of the docked container, a ceiling of the docked container, and one or more doors of the docked container.

Based on the one or more identified sections of the docked container, the material handling apparatus may be adapted to define a first area in the 3-D image that defines an exterior of the docked container. Subsequently, the material handling apparatus may be adapted to determine a first navigation path, within the first area, and ingress to the docked container. Further, the material handling apparatus may traverse along the first navigation path in order to traverse inside of the docked container. Additionally, the material handling apparatus may be adapted to identify one or more objects in the first area. The one or more objects in the first area may correspond to the objects that are placed and/or positioned exterior to the docked container. Further, the material handling apparatus may be adapted to determine whether the one or more identified objects correspond to articles. If the material handling apparatus determines that the one or more objects correspond to articles, the material handling apparatus may be adapted to halt the operation until the articles in the first area are removed. In an alternate exemplary embodiment, the material handling apparatus may be adapted to remove the articles from the first area and/or reposition the articles to another location outside of the first area.

Further, the material handling apparatus may be adapted to identify one or more transitional components in the first area. Some examples of the one or more transitional components may include, but are not limited to, a ramp and a dock leveler. Additionally, the material handling apparatus may be adapted to determine an orientation of the one or more transitional components with respect to a ground surface. For example, the material handling apparatus may be disposed on the ground surface when the 3D image is captured and/or received by the material handling apparatus. Accordingly, the material handling apparatus is operated based on the orientation of the one or more transitional components.

In the following description, like reference characters designate like or corresponding parts throughout the several views. Also, in the following description, it is to be understood that terms such as front, back, inside, outside, and the like are words of convenience and are not to be construed as limiting terms. Terminology used in this patent application is not meant to be limiting insofar as devices described herein, or portions thereof, may be attached or utilized in other orientations. References made to particular examples and implementations are for illustrative purposes and are not intended to limit the scope of the invention or the claims.

It should be appreciated that any patent, publication, or other disclosure material, in whole or in part, that is said to be incorporated by reference herein is incorporated herein only to the extent that the incorporated material does not conflict with existing definitions, statements, or other disclosure material set forth in this disclosure. As such, and to the extent necessary, the disclosure as explicitly set forth herein supersedes any conflicting material incorporated herein by reference.

The word "exemplary" is used herein to mean "serving as an example, instance, or illustration." Any implementation described herein as "exemplary" is not necessarily to be construed as preferred or advantageous over other implementations.

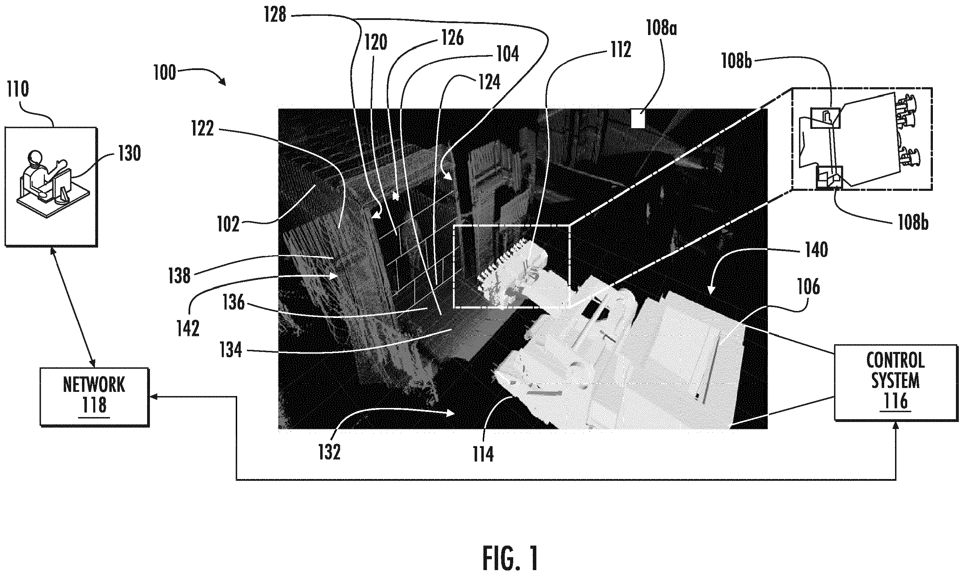

FIG. 1 illustrates a schematic representation of a worksite 100, in accordance with one or more exemplary embodiments. The worksite 100 may correspond to a predefined area where an operation such as loading and/or unloading of articles and storage of the articles may be facilitated. Some examples of the worksite 100 may include, but are not limited to, a warehouse, a retail outlet, and/or the like. The worksite 100 may include a container 102, one or more transitional components 104, a material handling apparatus 106, one or more image-capturing devices 108a, and 108b and a remote control center 110. The material handling apparatus 106 may further include an article manipulator 112, a plurality of traction devices 114, and a control system 116. The one or more image-capturing devices 108a, and 108b, the material handling apparatus 106, and the remote control center 110 may be communicatively coupled with each other through a network 118.

The container 102 may correspond to a storage unit that is adapted to store a plurality of articles 120. In an exemplary embodiment, the container 102 may be placed on a vehicle (not shown) such as a truck for transportation of the plurality of articles 120. The container 102 may include one or more sections such as one or more doors 122, a floor 124, a ceiling 126, and one or more sidewalls 128. For loading and unloading of the plurality of articles 120, the container 102 may be docked in the worksite 100 at a first predetermined location (depicted by 138) in the worksite 100. After docking of the container 102, the one or more transitional components 104 may be positioned in such a manner that the one or more transitional components 104 couple with the floor 124 of the docked container 102 and a ground surface 132 of the worksite 100.

In an exemplary embodiment, the one or more transitional components 104 may correspond to objects that are adapted to couple the ground surface 132 of the worksite 100 with the floor 124 of the container 102, such that a traversal path ingress and egress to and from the container 102 is formed. In an exemplary embodiment, an orientation of the one or more transitional components 104, with respect to the ground surface 132 of the worksite 100, may be adjusted in accordance with an orientation of the floor 124 of the container 102 with respect to the ground surface 132. For example, if an elevation of the floor 124 of the container 102 is offset to an elevation of the ground surface 132 of the worksite 100, a pitch of the one or more transitional components 104 may be adjusted such that the one or more transitional components 104 couples to both the floor 124 and the ground surface 132. In an exemplary embodiment, to allow the adjustment in the orientation of the one or more transitional components 104, the one or more transitional components 104 may be coupled to one or more actuators (not shown) such as hydraulic cylinders, motors, and/or the like. The one or more actuators may be actuated to allow the modification of the orientation of the one or more transitional components 104. Some examples of the one or more transitional components 104 may include, but are not limited to, a ramp 134, and a dock leveler 136.

In an exemplary embodiment, the ramp 134 may correspond to an inclination surface that may couple to surfaces at two different elevation levels. For example, the ramp 134 may be coupled to the ground surface 132 and the floor 124 of the docked container 102.

In an exemplary embodiment, the dock leveler 136 may correspond to a metal plate that may be coupled to a first end of the ramp 134 in such a manner that the dock leveler 136 may couple the floor 124 of the docked container 102 and the ramp 134.

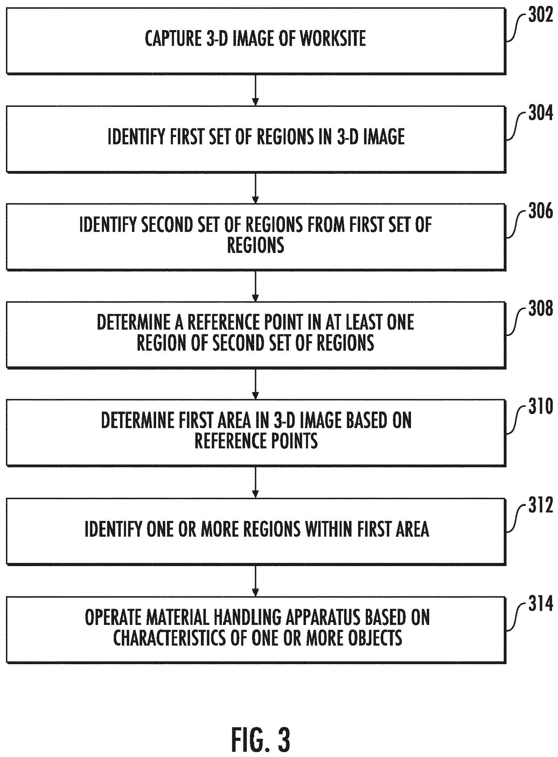

The material handling apparatus 106 may correspond to a machine that is adapted to load and unload the articles to and from the docked container 102. As discussed, the material handling apparatus 106 may include the control system 116 that is adapted to control the operation of one or more components of the material handling apparatus 106. For example, the control system 116 may be adapted to control the operation of the article manipulator 112, and the plurality of traction devices 114. In an exemplary embodiment, where the image-capturing device 108b may be positioned on the material handling apparatus 106, the control system 116 may be further adapted to control the operation of the image-capturing device 108b. In an exemplary embodiment, the control system 116 may be adapted to instruct the image-capturing device 108b to capture a 3-D image of the worksite 100 such that the 3-D image includes an image of the docked container 102. Thereafter, the control system 116 may be adapted to control the operation of the material handling apparatus 106 based on the captured 3-D image. Controlling the operation of the material handling apparatus 106 has been described later in conjunction with FIG. 3. Some examples of the material handling apparatus 106 may include, but are not limited to, a robotic carton unloader, a forklift machine, and/or any other machine that is adapted to load and unload articles to and from the docked container 102.

The one or more image-capturing devices 108a and 108b may be adapted to capture the 3-D image of the worksite 100. In an exemplary embodiment, the one or more image-capturing devices 108a and 108b may be positioned at predefined locations in the worksite 100. For example, the image-capturing device 108a may be positioned on and/or suspended from a ceiling (not shown) of the worksite 100. In an example embodiment, the image-capturing device 108b may be positioned on the material handling apparatus 106. More particularly, the image-capturing device 108b may be positioned on the article manipulator 112 of the material handling apparatus 106. For the purpose of ongoing description, the image-capturing device 108b has been considered to capture the 3-D image of the worksite 100. However, the scope of the disclosure should not limited to capturing the 3-D image using the image-capturing device 108b. It may be contemplated that the image-capturing device 108a can also be utilized to capture the 3-D image. The one or more image-capturing devices 108a and 108b may include an image sensor that is adapted to capture the 3-D image. In an exemplary embodiment, the 3-D image captured by the one or more image-capturing devices 108a and 108b may correspond to a 3-D point cloud, where a plurality of points (e.g., 3-D points defined by 3-D coordinates) is utilized to represent an object in the 3-D image. For example, the plurality of points may be utilized to represent a docked container 102 in the 3-D image. Each point in the plurality of points may include information pertaining to a coordinate of the point and an orientation of the point, with respect to the material handling apparatus 106. In an exemplary embodiment, the orientation of a point in the 3-D point cloud may correspond to a pitch, a yaw, and a roll of the point. In an exemplary embodiment, the coordinate of the point in the 3-D point cloud may be deterministic of a position of the point in the 3-D image. Further, the coordinate of the point may be deterministic of a depth of the point with respect to the image-capturing device 108b. After the capture of the 3-D image, the one or more image-capturing devices 108a and 108b may be adapted to transmit the captured 3-D image to the control system 116 of the material handling apparatus 106. Some examples of the one or more image-capturing devices 108a and 108b may include, but are not limited to, a camera, a stereo camera, a 2-D Lidar, a 3-D Lidar, and/or the like.

In an exemplary embodiment, the remote control center 110 may include one or more computing devices that may enable a user or administrator to monitor various operations being performed in the worksite 100. In an exemplary embodiment, the remote control center 110 may be communicatively coupled to each of the one or more image-capturing devices 108a and 108b, and the material handling apparatus 106 through the network 118. In an exemplary embodiment, the remote control center 110 may include an application server 130 that is communicatively coupled to the one or more image-capturing devices 108a, and 108b, and the material handling apparatus 106 through the network 118. The application server 130 may be adapted to monitor and control the operations of the one or more image-capturing devices 108a and 108b, and the material handling apparatus 106. In an exemplary embodiment, the functionalities of the control system 116 of the material handling apparatus 106, may be implemented in the application server 130. In such a scenario, the application server 130 may be adapted to remotely control the operations of the material handling apparatus 106. Further, in such a scenario, the need for the control system 116 in the material handling apparatus 106 may not be required. Some examples of the application server 130 may include, but are not limited to, a JBoss™ application server, Java™ Application server, Apache Tomcat™ server, IBM Websphere™, and/or the like.

The network 118 may correspond to a medium through which content and messages flow between various devices and/or machines in the worksite 100 (e.g., the one or more image-capturing devices 108a and 108b, and material handling apparatus 106). Examples of the network 118 may include, but are not limited to, a Wireless Fidelity (Wi-Fi) network, a Wireless Area Network (WAN), a Local Area Network (LAN), or a Metropolitan Area Network (MAN). Various devices and/or machines in the worksite 100 can connect to the network 118 in accordance with various wired and wireless communication protocols such as, for example, Transmission Control Protocol and Internet Protocol (TCP/IP), User Datagram Protocol (UDP), and 2G, 3G, or 4G communication protocols.

In operation, the container 102 may be docked in the worksite 100 at a first predetermined location 138. In an exemplary embodiment, the first predetermined location 138 may correspond to a gate (depicted by 142) in the worksite 100 through which, at least a section of the container 102 is received. For example, during the docking of the container 102 in the worksite 100, the one or more doors 122 of the container 102 are received through the gate 142.

Post docking of the container 102 in the worksite 100, the material handling apparatus 106 may be positioned at a second predetermined location (depicted by 140) in the worksite 100. Thereafter, the one or more image-capturing devices 108a and 108b may be adapted to capture the 3-D image of the worksite 100 in such a manner that the 3-D image includes the image of the docked container 102. In a scenario, where the image-capturing device 108a is utilized to capture the 3-D image, the 3-D image may include the image of the material handling apparatus 106 and the image of the docked container 102. Thereafter, the one or more image-capturing devices 108a and 108b may be adapted to transmit the captured 3-D image to the control system 116 in the material handling apparatus 106.

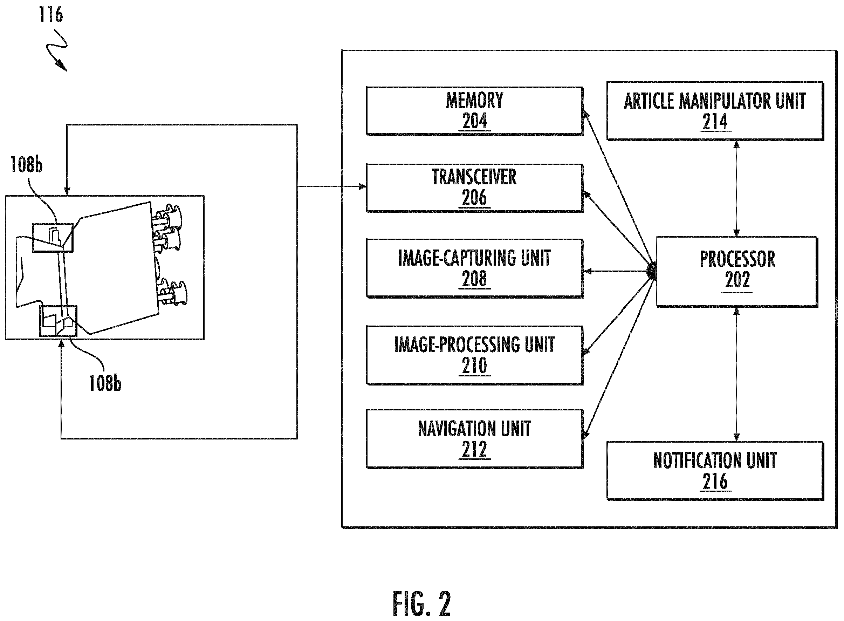

The control system 116 may be adapted to receive the 3-D image from the one or more image-capturing devices 108a and 108b. Further, the control system 116 may be adapted to identify the one or more sections of the container 102 in the 3-D image. Based on the one or more identified sections of the container 102, the control system 116 may be adapted to define a first area and a second area in the 3-D image. In an exemplary embodiment, the first area may represent an exterior of the docked container 102. Further, the second area may represent an interior of the docked container 102. The identification of the first area and the second area in the 3-D image has been described later in conjunction with FIG. 3. The control system 116 may be further adapted to identify one or more regions, in the first area, that are representative of one or more objects positioned exterior to the docked container 102. In an exemplary embodiment, the one or more objects may correspond to at least one of the articles and/or the one or more transitional components 104. Based on the identification of the one or more objects, the control system 116 may be adapted to operate the material handling apparatus 106. The structure of the control system 116 has been described in conjunction with FIG. 2.

FIG. 2 illustrates a block diagram of the control system 116, in accordance with one or more exemplary embodiments. The control system 116 may include a processor 202, a memory 204, a transceiver 206, an image-capturing unit 208, an image-processing unit 210, a navigation unit 212, an article manipulator unit 214, and a notification unit 216. The processor 202 may be communicatively coupled to each of the memory 204, the transceiver 206, the image-capturing unit 208, the image-processing unit 210, the navigation unit 212, the article manipulator unit 214 and the notification unit 216.

The processor 202 may include suitable logic, circuitry, and/or interfaces that are operable to execute one or more instructions stored in the memory 204 to perform a predetermined operation. The processor 202 may be implemented using one or more processor technologies. Examples of the processor 202 include, but are not limited to, an x86 processor, an ARM processor, a Reduced Instruction Set Computing (RISC) processor, an Application-Specific Integrated Circuit (ASIC) processor, a Complex Instruction Set Computing (CISC) processor, or any other processor.

The memory 204 may include suitable logic, circuitry, and/or interfaces that are adapted to store a set of instructions that are executable by the processor 202 to perform the predetermined operation. Some of the commonly known memory implementations include, but are not limited to, a random access memory (RAM), a read only memory (ROM), a hard disk drive (HDD), and a secure digital (SD) card.

The transceiver 206 may correspond to a communication interface that facilitates transmission and reception of messages and data to and from various devices operating in the worksite 100 through the network 118. For example, the transceiver 206 is communicatively coupled to the one or more image-capturing devices 108a and 108b through the network 118. Examples of the transceiver 206 may include, but are not limited to, an antenna, an Ethernet port, a USB port, a serial port, or any other port that can be adapted to receive and transmit data. The transceiver 206 transmits and receives data and/or messages in accordance with various communication protocols, such as for example, I2C, TCP/IP, UDP, and 2G, 3G, or 4G communication protocols.

The image-capturing unit 208 may include suitable logic and circuitry that may allow the image-capturing unit 208 to control the operation of the one or more image-capturing devices 108a and 108b. For example, the image-capturing unit 208 may instruct the one or more image-capturing devices 108a and 108b to capture the 3-D image of the worksite 100. In an exemplary embodiment, the capturing of the 3-D image of the worksite 100 may include capturing of the 3-D point cloud data of the worksite 100. In an exemplary embodiment, where the image-capturing device 108b is utilized to capture the 3-D image, the image-capturing unit 208 may additionally instruct the article manipulator unit 214 to actuate the one or more components of the material handling apparatus 106 during the capturing of the 3-D image. For example, the image-capturing unit 208 may instruct the article manipulator unit 214 to actuate the article manipulator 112. Further, the image-capturing unit 208 may correlate a kinematic data associated with movement of the one or more components of the material handling apparatus 106 with the 3-D point cloud data (captured by the image-capturing device 108b) to obtain the 3-D image. The capturing of the 3-D image has been described later in conjunction with FIG. 3. The image-capturing unit 208 may be implemented using one or more technologies such as, but not limited to, FPGA, ASIC, and the like.

The image-processing unit 210 may include suitable logic and circuitry that may enable the image-processing unit 210 to analyze the 3-D image. In an exemplary embodiment, the image-processing unit 210 may receive the 3-D image from the image-capturing unit 208. Further, the image-processing unit 210 may be adapted to identify the one or more sections of the docked container 102 in the 3-D image. Further, based on the one or more identified sections of the docked container 102, the image-processing unit 210 may be adapted to define the first area in the 3-D image (representing the exterior of the docked container 102). Further, the image-processing unit 210 may be adapted to identify the one or more objects in the first area. Additionally, the image-processing unit 210 may be adapted to determine one or more characteristics of the one or more objects identified in the first area. Further, the one or more characteristics of the one or more identified objects are stored in the memory 204. The image-processing unit 210 may be implemented using one or more technologies such as, but not limited to, FPGA, ASIC, and the like.

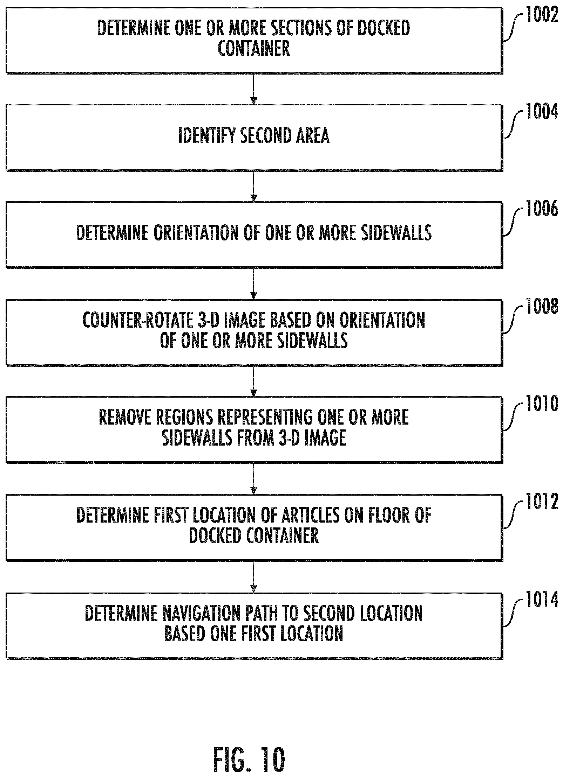

The navigation unit 212 may include suitable logic and circuitry that may enable the navigation unit 212 to determine a first navigation path ingress and egress to and from the docked container 102. Further, the navigation unit 212 may be adapted to store the data pertaining to the first navigation path in the memory 204. The determination of the first navigation path has been described later in conjunction with FIG. 10. The navigation unit 212 may be implemented using one or more technologies such as, but not limited to, FPGA, ASIC, and the like.

The article manipulator unit 214 may include suitable logic and circuitry that may enable the article manipulator unit 214 to control the operation of the article manipulator 112 of the material handling apparatus 106. Further, the article manipulator unit 214 may operate the article manipulator 112 according to pre-stored instructions that allow the article manipulator 112 to pick an article of the plurality of articles 120 (stored in the docked container 102) and place the picked article at a predetermined location in the worksite 100. Additionally, the article manipulator unit 214 may be adapted to record a kinematic data pertaining to the movement of the article manipulator 112. Further, the article manipulator unit 214 may be adapted to store the kinematic data pertaining to the movement of the article manipulator 112 in the memory 204. The article manipulator unit 214 may be implemented using one or more technologies such as, but not limited to, FPGA, ASIC, and the like.

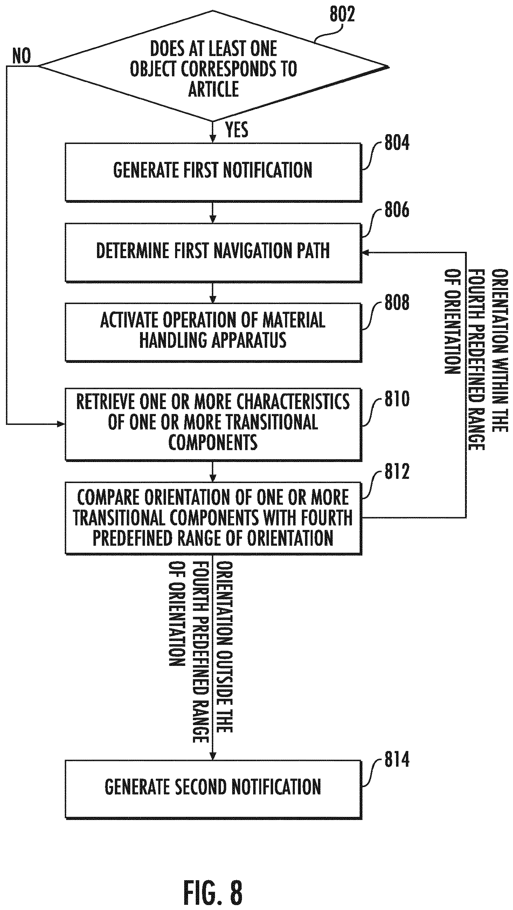

The notification unit 216 may include suitable logic and circuitry that may enable the notification unit 216 to generate a first notification and a second notification based on the one or more characteristics of the one or more objects identified in the first area of the 3-D image. In an exemplary embodiment, the first notification may be indicative of an article being present in the first area of the 3-D image. In an exemplary embodiment, the second notification may be indicative of a misalignment between the one or more transitional components 104 and the docked container 102. In an exemplary embodiment, the generation of the first notification and the second notification has been described later in conjunction with FIG. 8. In various embodiments, the notification unit 216 may be configured to generate various other notifications in place of and/or in addition to the first and/or second notification. The notification unit 216 may be implemented using one or more technologies such as, but not limited to, FPGA, ASIC, and the like.

In an exemplary embodiment, the processor 202 may be adapted to control and monitor the operations of various units in the control system 116. In an alternate exemplary embodiment, the image-capturing unit 208, the image-processing unit 210, the navigation unit 212, the article manipulator unit 214, and the notification unit 216 may be embedded in the processor 202, itself. In such a scenario, the processor 202 may be adapted to perform the operations of each unit in the control system 116. The operation of the control system 116 has been described in detail in conjunction with FIG. 3.

FIG. 3 illustrates a flowchart 300 of a method for operating the material handling apparatus 106, in accordance with one or more exemplary embodiments. The flowchart 300 has been described in conjunction with FIG. 1 through FIG. 8.

At block 302, the 3-D image of the worksite 100 is captured. In an exemplary embodiment, the image-capturing unit 208 may be adapted to instruct the image-capturing device 108b to capture the 3-D image of the worksite 100. In an exemplary embodiment, the image-capturing unit 208 may transmit the instruction to the image-capturing device 108b to capture the 3-D point cloud data of the worksite 100. Concurrently, the image-capturing unit 208 may instruct the article manipulator unit 214 to actuate the article manipulator 112 of the material handling unit 106 to traverse along a predetermined path. As the image-capturing device 108b is mounted on the article manipulator 112, therefore, during the traversal of the article manipulator 112, the image-capturing device 108b also traverses along the predetermined path. In an exemplary embodiment, the image-capturing unit 208 may instruct the image-capturing device 108b to capture the 3-D point cloud data of the worksite 100, continuously, during the traversal of the article manipulator 112 along the predetermined path. Further, during the traversal of the article manipulator 112, the article manipulator unit 214 may capture the kinematic data of the article manipulator 112. The article manipulator unit 214 may be adapted to store the kinematic data in the memory 204. In an exemplary embodiment, the kinematic data associated with the article manipulator 112 may correspond to data that defines a motion of the article manipulator 112. In an exemplary embodiment, the kinematic data may include information pertaining to a position of the article manipulator 112, a relative velocity of article manipulator 112, and an acceleration of the article manipulator 112, at a plurality of time instants.

To generate the 3-D image of the worksite 100 from the 3-D point cloud data captured by the image-capturing device 108b, the image-capturing unit 208 may extract the kinematic data of the article manipulator 112 from the memory 204. Further, the image-capturing unit 208 may correlate the kinematic data with the 3-D point cloud data to generate the 3-D image. To correlate the kinematic data of the article manipulator 112 with the 3-D point cloud data, the image-capturing unit 208 may determine one or more time instants at which the 3-D point cloud data was captured by the image-capturing device 108b during the traversal of the article manipulator 112 along the predetermined path. Further, the image-capturing unit 208 may determine at least the position of the article manipulator 112 at the one or more determined time instants, based on the kinematic data associated with the traversal of the article manipulator 112 along the predetermined path. Thereafter, the image-capturing unit 208 may be adapted to stitch the 3-D point cloud data, captured at the one or more determined time instants, together in accordance with the determined position of the article manipulator 112 at the one or more determined time instants.

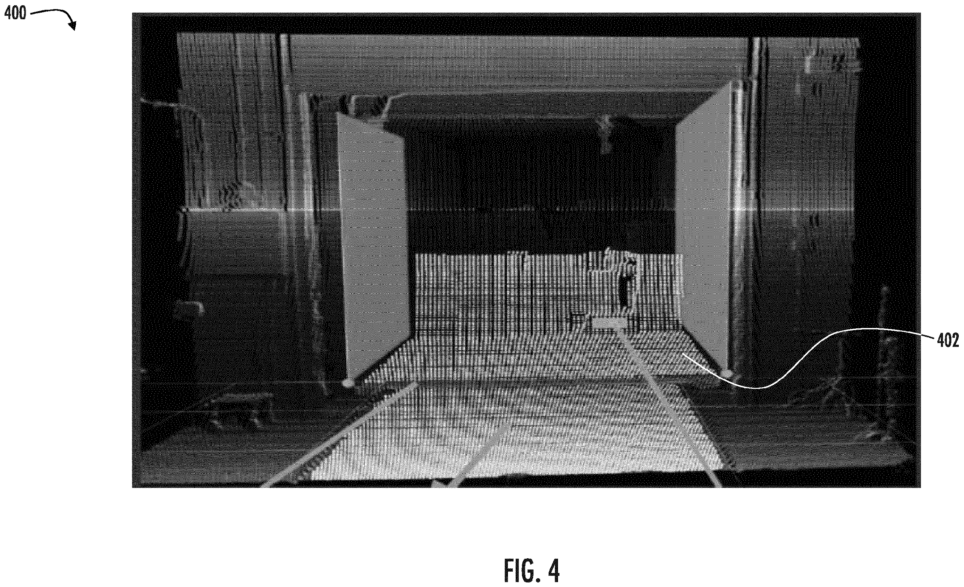

In an exemplary embodiment, the aforementioned operation (i.e., correlation of the 3-D point cloud data and the kinematic data associated with the article manipulator 112) may be performed in real time. In such a scenario, at the time instant, when the image-capturing device 108b captures the 3-D point cloud data, the image-capturing unit 208 may be adapted to receive the position of the article manipulator 112 from the article manipulator unit 214. Thereafter, the image-capturing unit 208 may correlate the 3-D point cloud data in accordance with the position of the article manipulator 112 to generate the 3-D image. An exemplary 3-D image of the worksite 100 has been illustrated in FIG. 4.

Referring to FIG. 4, the exemplary 3-D image 400 of the worksite 100 is illustrated. It can be observed that the exemplary 3-D image 400 corresponds to a 3-D point cloud of the worksite 100, where a plurality of points 402 have been utilized to represent one or more machines and/or the objects in the worksite 100. From FIG. 4, it can be observed that the plurality of points 402 represents the docked container 102. Further, the plurality of points 402 represent the plurality of articles 120 placed in the docked container 102 and the one or more transitional components 104.

Referring back to FIG. 3, at block 304, a first group of regions is identified in the 3-D image (such as the 3-D image 400). In an exemplary embodiment, the image-processing unit 210 is adapted to identify the first group of regions in the 3-D image (such as the 3-D image 400).

In an exemplary embodiment, the image-processing unit 210 may be adapted to cluster a set of points of the plurality of points 402 to define a region, based on the orientation of the plurality of points 402 with respect to the material handling apparatus 106. In an exemplary embodiment, the image-processing unit 210 may cluster the set of points having substantially similar orientation with respect to the material handling apparatus 106. In an exemplary embodiment, as discussed above, the orientation of a point of the plurality of points 402 may correspond to a measure of the pitch, the yaw, and the roll of the point with respect to the material handling apparatus 104. For the sake of brevity, hereinafter the term 'orientation' has been used to refer to the phrase "orientation with respect to the material handling apparatus 106".

To cluster the set of points as the region, the image-processing unit 210 may be adapted to define the region to include a single point (interchangeably referred to as original point) of the plurality of points 402. Thereafter, the image-processing unit 210 may be adapted to determine the orientation of each of one or more points that is adjacent to the original point (included in the region). If the image-processing unit 210 determines that a variance in the orientation of each of the one or more points and the orientation of the original point is within a first predefined range of orientation, the image-processing unit 210 may modify the boundary of the region to include the one or more points. Therefore, the modified region may include the original point and the one or more points adjacent to the original points. This process is repeated over the 3-D image (such as 3-D image 400) until the variance between the orientations of the one or more points (adjacent to the points in the region) and the orientations of the original points in the region, is outside the first predefined range of orientation. Similarly, other regions of the first group of regions may be identified in the 3-D image (such as the 3-D image 400).

In an alternate exemplary embodiment, the variance of the orientation may be determined between the orientations of the one or more points (adjacent to the region in the 3-D image (such as 3-D image 400) and the orientation of the region. In such an exemplary embodiment, the image-processing unit 210 may be adapted to determine the orientation of the region, prior to determining the variance. In an exemplary embodiment, the orientation of the region may correspond to the orientation of a centroid of the region. Therefore, the image-processing unit 210 may be adapted to determine the centroid of the region. Thereafter, the image-processing unit 210 may be adapted to determine the orientation of the centroid of the region. The orientation of the centroid of the region may be considered as the orientation of the region itself. Further, based on the orientation of the centroid of the region, the image-processing unit 210 may be adapted to determine the variance between the orientation of the region and the orientations of the one or more points adjacent to the region in the 3-D image (such as 3-D image 400).

A person having ordinary skills in the art would appreciate that the scope of the disclosure is not limited to considering the orientation of the centroid of the region as the orientation of the region. In an alternate exemplary embodiment, the image-processing unit 210 may be adapted to consider the orientation of the center of the region to be the orientation of the region, without departing from the scope of the disclosure.

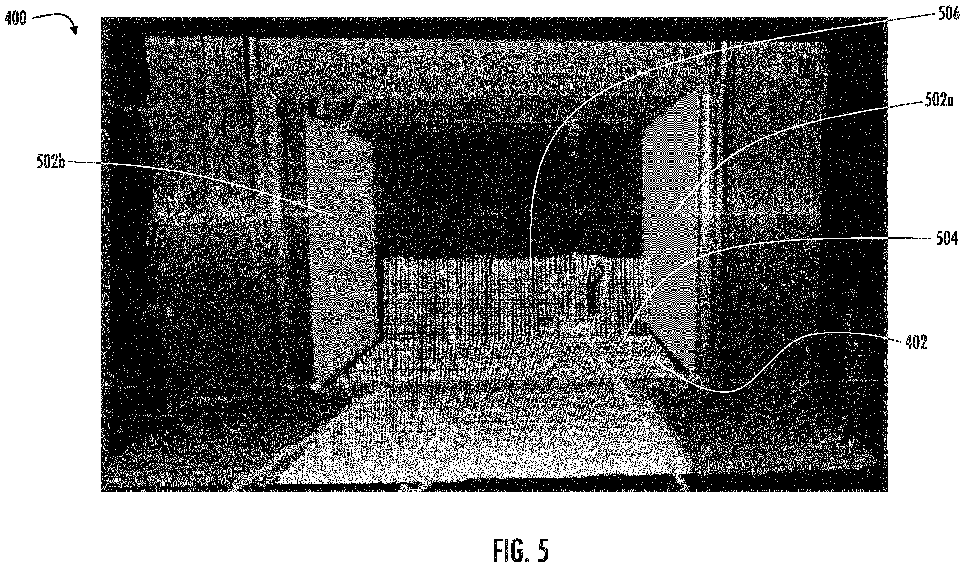

In an exemplary embodiment, the first group of regions identified by the image-processing unit 210 may be representative of the one or more sections of the docked container 102, and the plurality of articles 120 placed in the docked container 102. An exemplary first group of regions is illustrated in FIG. 5. Referring to FIG. 5, it can be observed that the image-processing unit 210 has identified the regions 502a, 502b, 504, and 506 as the first group of regions in the exemplary 3-D image 400.

Referring back to FIG. 3, at block 306, a second group of regions is identified from the first group of regions. In an exemplary embodiment, the image-processing unit 210 may be adapted to identify the second group of regions from the first group of regions. In an exemplary embodiment, the second group of regions may correspond to the regions that represent the one or more sections of the docked container 102. To identify the second group of regions, in an exemplary embodiment, the image-processing unit 210 may be adapted to determine the orientation of each region in the first group of regions. As discussed above, the orientation of a region may correspond to the orientation of the centroid of the region, in an example embodiment. Therefore, to determine the orientation of the regions in the first group of regions, the image-processing unit 210 may be adapted to determine the orientation of the respective centroid of the first group of regions. For example, the image-processing unit 210 may be adapted to determine the orientation of the first group of regions 502a, 502b, 504, and 506 (identified in the 3-D image 400) by determining the orientation of the respective centroid.

Thereafter, the image-processing unit 210 may be adapted to check whether the orientation of each region in the first group of regions, such as the regions 502a, 502b, 504, and 506, lies within at least one of one or more second predefined range of orientations. In an exemplary embodiment, the one or more second predefined range of orientations correspond to a range of orientation that a section of the docked container 102 may usually have, when the material handling apparatus 106 is positioned at the second predetermined location in the worksite 100. Further, the one or more second predefined range of orientations are pre-stored in the memory 204 prior to starting the operation of the material handling apparatus 106. The following table illustrates an exemplary one or more second predefined range of orientations corresponding to the one or more sections of the docked container 102:

**Table 1: The one or more predefined range of orientations**

| Type of section of docked container 102 | Range of Pitch (degrees) | Range of Yaw (degrees) | Range of Roll (degrees) |
|---|---|---|---|
| One or more sidewalls 128 | 0-10 | -50 to 50 | 0 |
| Floor 124 | -10 to +10 | 0 | 0 |

Based on the comparison of the determined orientation of the first group of regions with each of the one or more second predefined range orientations, the image-processing unit 210 may be adapted to identify the regions of the first group of regions that represent the one or more sections of the docked container 102. In an embodiment, the regions identified by the image-processing unit 210, based on the comparison, correspond to the second group of regions.

For example, the image-processing unit 210 determines that the orientation of a region in the first group of regions is 10 degrees pitch, 50 degrees yaw, and 0 degrees roll. Thereafter, the image-processing unit 210 compares the orientation of the region with one or more second predefined ranges of the orientations (illustrated in table 1) to determine that the region may correspond to a sidewall of the one or more sidewalls 128 of the docked container 102. Therefore, the image-processing unit 210 identifies the region as one of the second group of regions. Similarly, the image-processing unit 210 may be adapted to determine whether other regions in the first group of regions correspond to the one or more sections of the docked container 102. Further, the image-processing unit 210 may be adapted to store the information pertaining to the second group of regions in the memory 204. In an exemplary embodiment, the information pertaining to the second group of regions may include, but is not limited to, the orientation of each region in the second group of regions, and a type of a section (of the one or more sections of the docked container 102) being represented by each region of the second group of regions. In an exemplary embodiment, the type of the one or more sections may correspond to at least the one or more sidewalls 128 of the docked container 102, the floor 124 of the docked container 102, and the ceiling 126 of the docked container 102. An exemplary second group of regions has been illustrated in FIG. 5.

Referring to FIG. 5, the image-processing unit 210 may determine that the regions 502a and 502b represent the one or more sidewalls 128 of the docked container 102. Further, the image-processing unit 210 may determine that the region 504 represents the floor 124 of the docked container 102. As the regions 502a, 502b, and 504 represent the one or more sections of the docked container 102, therefore, the image-processing unit 210 may be adapted to consider the regions 502a, 502b, and 504 as the second group of regions. Further, the image-processing unit 210 may determine that the region 506 is not representing any of the one or more sections of the docked container 102. Therefore, the image-processing unit 210 may not categorize the region 506 as one of the second group of regions.

At block 308, a reference point is determined in at least one region of the second group of regions, which represents the one or more sidewalls 128 of the docked container 102. In an exemplary embodiment, the image-processing unit 210 may be adapted to determine the reference point. For example, the image-processing unit 210 may be adapted to identify the reference point in each of the regions 502a and 502b (refer to FIG. 5), as the regions 502a and 502b represent the two sidewalls 128 of the docked container 102 in the 3-D image 400.

Prior to determining the reference point in the at least one region, the image-processing unit 210 may be adapted to retrieve the information pertaining to each region in the second group of regions from the memory 204. Based on the information, the image-processing unit 210 may be adapted to select the at least one region from the second group of regions that represents the one or more sidewalls 128 of the docked container 102. As discussed in the block 306, the information pertaining to the second group of regions includes the type of the one or more sections being represented by each region in the second group of regions. Therefore, based on the information, the image-processing unit 210 may identify the at least one region of the second group of regions that represents a sidewall of the one or more sidewalls 128 of the docked container 102.

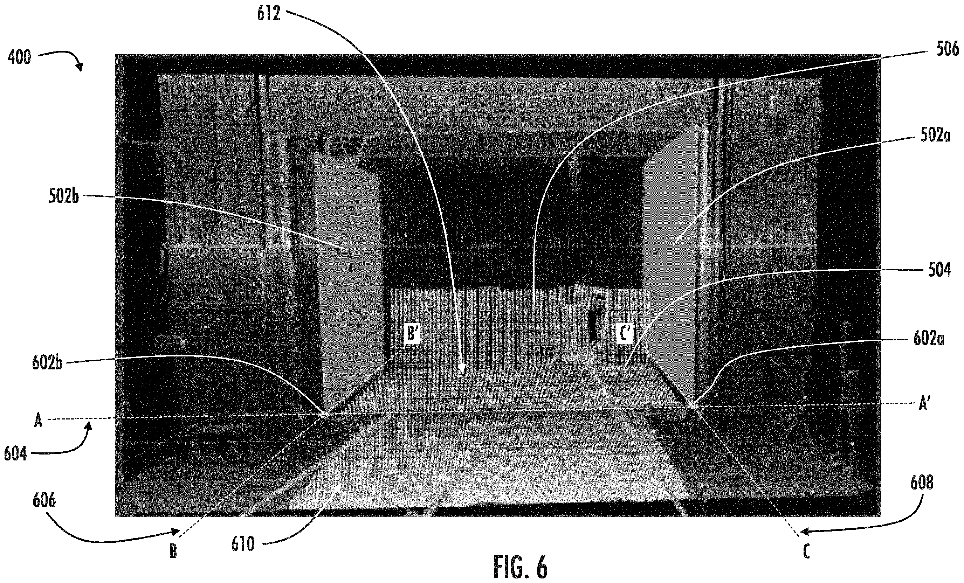

After identification of the at least one region, the image-processing unit 210 may be adapted to identify a point of the one or more points (encompassed within the at least one region) that has a minimum elevation, with respect to the ground surface 132, in comparison to the elevation of other points in the at least one region. Further, the identified point has a minimum depth in comparison to other points in the at least one region. In an exemplary embodiment, the image-processing unit 210 defines the identified point as the reference point. For example, referring to FIG. 6, the reference points 602a and 602b have been identified in the regions 502a and 502b, respectively.

At block 310, the first area is defined in the 3-D image based on the reference points (such as the reference points 602a and 602). In an exemplary embodiment, the image-processing unit 210 may be adapted to define the first area. The operation performed in block 310 has been further described in conjunction with FIG. 6.

To define the first area, the image-processing unit 210 may be adapted to define an Axis A-A' (depicted by 604) that passes through both the reference points 602a and 602b. Further, the image-processing unit 210 defines an axis B-B' (depicted by 606) such that the axis B-B' (depicted by 606) extends along the length of the sidewall (represented by the region 502a) of the docked container 102 and is substantially parallel to a plane of the region 504 representing the floor 124 of the docked container 102. Further, the Axis B-B' (depicted by 606) passes through the reference point 602a. Similarly, the image-processing unit 210 defines an Axis C-C' (depicted by 608) that passes through the reference point 602b and is substantially parallel to the plane of the region 504 representing the floor of the docked container 102. Further, the Axis C-C' (depicted by 608) extends along the length of the sidewall (represented by the region 502b) of the docked container 102.

Thereafter, the image-processing unit 210 may be adapted to identify one or more portions of the 3-D image 400 that are encompassed within the Axis A-A' (depicted by 604), the Axis B-B' (depicted by 606), and the Axis C-C' (depicted by 608). From FIG. 6, it can be observed that there are two such portions (depicted by 610 and 612) of the 3-D image 400 that are encompassed within the Axis A-A' (depicted by 604), the Axis B-B' (depicted by 606), and the Axis C-C' (depicted by 608).

Subsequently, the image-processing unit 210 may be adapted to select a portion of the one or more portions (such as the portions 610 and 612) in the 3-D image 400 as the first area, based on a measure of depth of the points in each of the one or more portions (such as the portions 610 and 612) in the 3-D image 400. In an exemplary embodiment, the measure of the depth of the points included in the selected portion is less than a measure of the depth of the reference points 602a and 602b. From FIG. 6, it can be observed that the points included in the portion 610 have a depth less than the depth of the reference points 602a and 602b. Therefore, the portion 610 is selected by the image-processing unit 210 as the first area. Further, the first area (represented by the region 610) defines the exterior of the docked container 102. Additionally, the portion 612 (in FIG. 6) is considered, by the image-processing unit 210, as the interior of the docked container 102. Hereinafter, the portion 612 representing the interior of the docked container 102 has been referred to as the second area.

Referring back to FIG. 3, at block 312, one or more regions are identified within the first area (such as the first area 610). In an exemplary embodiment, the image-processing unit 210 may be adapted to identify the one or more regions in the first area (such as the first area 610). In an exemplary embodiment, the image-processing unit 210 may employ the methodology described with respect to block 304 to identify the one or more regions in the first area (such as the first area 610).

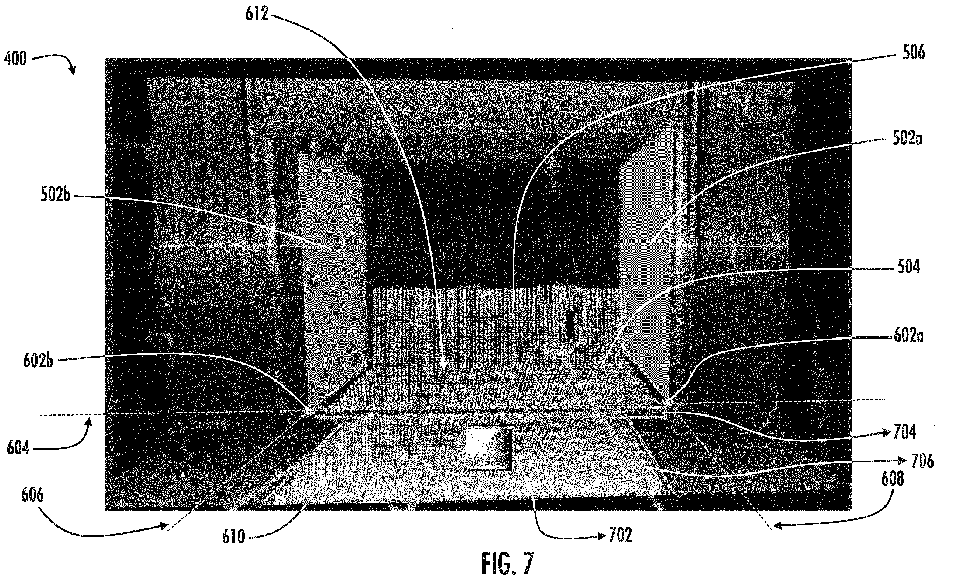

In an exemplary embodiment, the one or more regions in the first area (such as the first area 610) represent the one or more objects that are placed exterior to the docked container 102. In an exemplary embodiment, the one or more objects may include, but are not limited to, an article, and/or the one or more transitional components 104. In an exemplary embodiment, the article may correspond to articles of the plurality of articles 120 (placed in the docked container 102) that might have spilled out of the docked container 102 during opening of the one or more doors of the docked container 102. The one or more identified regions in the 3-D image 400 have been illustrated in FIG. 7.

Referring to FIG. 7, it can be observed that the image-processing unit 210 has identified the regions 702, 704, and 706 as the one or more regions in the first area 610 of the 3-D image 400.

Referring back to FIG. 3, at block 312, the image-processing unit 210 may be further adapted to identify a type of the one or more objects being represented by the one or more regions (such as the regions 702, 704, and 706). In an exemplary embodiment, the type of the one or more objects may include, but are not limited to, at least one of the one or more transitional components 104, and/or one or more articles. In an exemplary embodiment, to determine the type of the one or more objects, the image-processing unit 210 may determine one or more of the orientation and the dimensions of each of the one or more regions (such as the regions 702, 704, and 706). Further, the image-processing unit 210 may compare the determined orientation of each of the one or more regions and the dimensions of each of the one or more regions, with a set of third predefined range of orientations and a set of predefined range of dimensions. In an exemplary embodiment, the set of third predefined range of orientations and the set of predefined range of dimensions correspond to known ranges of orientations and dimensions of each type of the one or more objects. Further, the set of third predefined range of orientations and the set of predefined range of dimensions are pre-stored in the memory 204 prior to starting the operation of the material handling apparatus 106. The following table illustrates an exemplary set of ranges of third predefined orientation and ranges of dimensions:

**Table 2: Third predefined range of orientations and predefined range of dimensions**

| Type of the one or more objects | Range of yaw of the object (degrees) | Range of pitch of the object (degrees) | Range of roll of the object (degrees) | Range of dimensions |
|---|---|---|---|---|
| One or more transitional components | 0-10 | 30-50 | 0-20 | Length - 10-30 meters |
| | | | | Width - 5-10 meters |
| Articles | NA | NA | NA | Length: 10-50 cm length; |
| | | | | Height: 70-80 cm height, and width: 20-30 cm |

For example, the image-processing unit 210 determines that a region of the one or more regions has a dimension of 50 cm X 30 cm X 70 cm. The image-processing unit 210 may determine the region as the article, as the dimensions of the region are within the range of the dimensions of the articles. Similarly, the image-processing unit 210 may identify the region as the one or more transitional components 104 if the orientation and dimensions of a region lie within the third predefined range of orientations and the predefined range of dimensions of the one or more transitional components 104 (illustrated in table 2). In an exemplary embodiment, the image-processing unit 210 may be adapted to store the information pertaining to the orientation and the dimension of each of the one or more regions as the one or more characteristics associated with each of the one or more objects (represented by the one or more regions).

Referring back to FIG. 7, the image-processing unit 210 may identify the region 702 as the article based on the orientations and the dimensions of the region 702. Further, the image-processing unit 210 may identify the regions 704 and 706 as the one or more transitional components 104 based on the orientation of the regions 704 and 706, and the dimensions of the regions 704 and 706.

Referring to FIG. 3, at block 314, the material handling apparatus 106 is operated based on the one or more characteristics of the one or more objects (identified in the block 312). In an exemplary embodiment, the processor 202 may be adapted to operate the material handling apparatus 106 based on the one or more characteristics of the one or more objects (for example, the one or more objects identified in the first area 610 of the 3-D image 400). In an exemplary embodiment, the one or more characteristics of the one or more objects may correspond to at least one of the orientation of the one or more objects with respect to the material handling apparatus 106, and the dimensions of the one or more objects. The operation of the material handling apparatus 104 has been described in conjunction with FIG. 8.

FIG. 8 illustrates a flowchart 800 of a method for operating the material handling apparatus 106, in accordance with one or more embodiments. In an exemplary embodiment, the flowchart 800 is performed post identification of the one or more objects in the block 312. The flowchart 800 has been described in conjunction with FIGS. 1 through FIGS. 7.

At block 802, a check is performed to determine whether at least one object of the one or more objects (such as the objects represented by the one or more regions 702, 704, and 706) corresponds to an article. In an exemplary embodiment, the navigation unit 212 is adapted to perform the check. In an exemplary embodiment, the navigation unit 212 may retrieve the information pertaining to the one or more objects (being represented by the one or more regions) from the memory 204. As discussed, the information pertaining to the one or more objects may include the information pertaining to the type of the one or more objects. Therefore, based on the information, pertaining to each of the one or more objects, the navigation unit 212 may be adapted to determine whether at least one object of the one or more objects corresponds to the article. For example, referring to FIG. 7, the navigation unit 212 may determine that the object represented by the region 702 is an article.

If at block 802, the navigation unit 212 determines that at least one object corresponds to an article, the navigation unit 212 may be adapted to process the block 804. Else, the navigation unit 212 may be adapted to process the block 810.

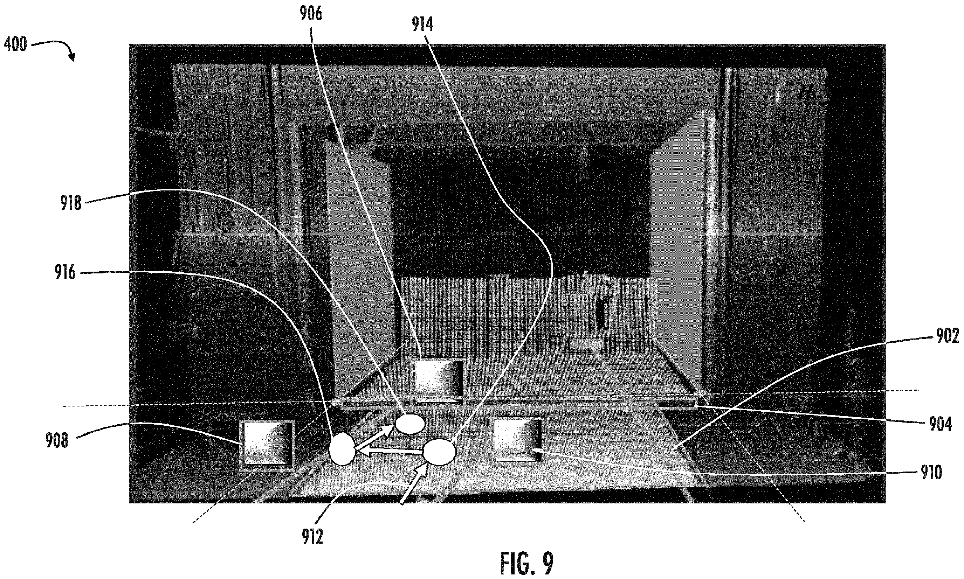

At block 804, a first notification is generated. In an exemplary embodiment, the notification unit 216 may be adapted to generate the first notification. For example, the navigation unit 212 may provide a communication to the notification unit 216 and responsive to receiving and/or processing the communication, the notification unit 216 may generate the first notification. In an embodiment, the first notification may be indicative of a presence of the article in the exterior of the docked container 102 (for example, the article, represented by the region 702, is present in the first area 610 of the 3-D image 400). Concurrently, the processor 202 may be adapted to halt the operation of the material handling apparatus 106 until the article is removed from the exterior (i.e., defined by the first area in the 3-D image) of the docked container 106. An example scenario of determination of the one or more object(s) as the article has been illustrated in FIG. 9.

In an exemplary embodiment, the notification unit 216 may be further adapted to transmit the first notification to the remote control center 110, where the first notification may be displayed on a display device of the application server 130 (placed in the remote control center 110). In response to the display of the first notification, for example, the operator in the remote control center 110 may generate an instruction for a worker in the worksite 100 to remove the article from the first area (such as the first area 610). In an example embodiment, in response to receipt and/or processing of the first notification, for example, the remote control center 110 may be configured to automatically generate an instruction for a worker in the worksite 100 to remove the article from the first area (such as the first area 610) and transmit the instruction to a mobile computing entity associated with the worker.

Further, after the article is removed from the first area (for example the first area 610), the processor 202 may be adapted to repeat the operations explained in the flowchart 300 to determine whether there are any additional articles present in the exterior of the docked container 102.

In an alternate exemplary embodiment, in response to the determination that at least one object is an article, the navigation unit 212 may be adapted to determine a second navigation path to a location in proximity to the at least one object. Further, the navigation unit 212 may be adapted to actuate the plurality of traction devices 114 to facilitate a traversal of the material handling apparatus 212 to the location. Thereafter, the processor 202 may instruct the article manipulator unit 214 to actuate the article manipulator 112 to pick the at least one object and place the at least one object at a location outside the first area (for example the first area 610). The operation of the picking and placing of the at least one object may be repeated until all the objects (identified as articles) are removed from the first area. An exemplary second navigation path has been illustrated in FIG. 9.

Thereafter, the navigation unit 212 may be adapted to traverse the material handling apparatus 106 along a path back to the predetermined second location, where the operation described in the flowchart 300 is repeated. In an exemplary embodiment, the operation of picking and placing the at least one object may be performed in addition to generation of the first notification.

At block 806, the first navigation path ingress to the docked container 102 is determined. In an exemplary embodiment, the navigation unit 212 may be adapted to determine the first navigation path ingress to the docked container 102. In an exemplary embodiment, the first navigation path ingress to the docked container 102 is determined based on the identification of the plurality of articles 120 placed in the docked container 102. The identification of the plurality of articles 120 and the determination of the first navigation path ingress to docked container 102 has been described later in conjunction with FIG. 10.

At block 808, the operation of the material handling apparatus 106 is activated. In an embodiment, the processor 202 may be adapted to activate the operation of the material handling apparatus 106. In an exemplary embodiment, the activation of the material handling apparatus 106 includes activation of a vision system (not shown) installed in the material handling apparatus 106. Thereafter, the material handling apparatus 106 operates in accordance to the image captured by the vision system. In an exemplary embodiment, the vision system is different from the one or more image-capturing devices 108a and 108b.

Referring back to the block 802, if the navigation unit 212 determines that none of the one or more objects corresponds to the article, the operation at block 810 is performed. At the block 810, the one or more characteristics of the one or more transitional components 104 (represented by the regions 704 and 706 in the first area 610 in the 3-D image 400) are retrieved from the memory 204. In an exemplary embodiment, the processor 202 may be adapted to retrieve the one or more characteristics. Further, as discussed above that the one or more characteristics of the one or more transitional components 104 may include, but are not limited to, the orientation of the one or more transitional components, and the dimension of the of the one or more transitional components 104.

At block 812, the orientation of each of the one or more transitional components 104 is compared within a fourth predefined range of the orientation. In an exemplary embodiment, the processor 202 may be adapted to perform the comparison. In an exemplary embodiment, if the processor 202 determines (based on the comparison) that the orientation of the one or more transitional components 104 is within the fourth predefined range of orientation, the processor 202 may be adapted to perform the operation in the block 806. Else the processor 202 may be adapted to perform the operation in the block 814.

As discussed above, the one or more transitional components 104 include the ramp 134 and the dock leveler 136. Therefore, while performing the comparison, the processor 202 may be adapted to compare the orientation of the ramp 134 with the fourth predefined range of orientation associated with the ramp 134. Similarly, the processor 202 may be adapted to perform the comparison of the orientation of the dock leveler 136 with the fourth predefined range of orientation associated with the dock leveler 136. If the processor 202 determines that the orientation of at least one of the ramp 134 or the dock leveler 136 is within the respective range of the orientation, the processor 202 may be configured to perform the operation in the block 806. Else the processor 202 may be adapted to perform the operation in the block 814.

At block 814, a second notification is generated. In an exemplary embodiment, the notification unit 216 may be adapted to generate the second notification. In an exemplary embodiment, the second notification is indicative of a misalignment between the one or more transitional components 104 and the floor 124 of the docked container 102. Further, the processor 202 may be adapted to transmit the second notification to the remote control center 110, where the second notification may be displayed on the display device of the application server 130. Based on the generated second notification, the operator in the remote control center 110 may instruct a worker in the worksite 100 to correct the alignment between the one or more transitional components 104 and the floor 124 of the docked container 102. In an example embodiment, in response to receipt and/or processing of the second notification, for example, the remote control center 110 may be configured to automatically generate an instruction for a worker in the worksite 100 to correct the alignment between the one or more transitional components 104 and the floor 124 of the docked container 102 and transmit the instruction to a mobile computing entity associated with the worker. In an exemplary embodiment, the operator may directly provide an input (e.g., via a user input device of the remote control center 110) to correct the misalignment between the one or more transitional components 104 and the floor 124 of the docked container 102.

FIG. 9 illustrates the exemplary scenario 900 of operating the material handling apparatus 106, in accordance with one or more exemplary embodiments. The exemplary scenario 900 has been described in conjunction with FIGS. 3 through FIGS. 8.

The exemplary scenario 900 illustrates the 3-D image 400. Further, it can be observed from FIG. 9 that the 3-D image 400 includes the first area 610. Further, in the first area 610, the one or more regions 902, 904, 906, 908, and 910 are identified by the image-processing unit 210. The process of identification of the type of the one or more objects represented by the one or more regions (902, 904, 906, 908, and 910) has been described with respect to block 312. For example, the image-processing unit 210 identifies the regions 902 and 904 as the ramp 134 and the dock leveler 136 (i.e., the one or more transitional components 104), respectively. Further, the image-processing unit 210 identifies the regions 906, 908, and 910 as the articles based on the dimensions of the regions 906, 908, and 910. Further, it can be observed that the article (represented by the region 908) partially lies in the first area 610. In an exemplary embodiment, the image-processing unit 210 may consider the article (represented by the region 908) as an obstruction even if a part of the region 908 lies outside the first area 610. In an exemplary embodiment, the processor 202 does not activate the operation of the material handling apparatus 106 until all the articles (represented by the regions 906, 908, and 910) are removed from the first area 610.

Further, in the exemplary scenario 900, the second navigation path 912 has been illustrated. It can be observed that the second navigation path 912 includes one or more locations 914, 916, and 918. The location 912 is in proximity to the location of the article represented by the region 910. Similarly, the locations 914 and 916 are in proximity to the locations of the articles represented by the regions 908 and 906, respectively. In an embodiment, the material handling apparatus 106 may traverse along the second navigation path 912 to the locations 914, 916, and 918 to pick the articles in proximity of the respective locations 914, 916, and 918.

FIG. 10 illustrates a flowchart 1000 of a method for picking the plurality of articles 120 loaded in a docked container 102. In an exemplary embodiment, the flowchart 1000 has been described in conjunction with FIGS. 1 through FIGS. 9.

At block 1002, the one or more sections of the docked container 102 are determined. In an exemplary embodiment, the image-processing unit 210 may be adapted to determine the one or more sections of the docked container 102 using the methodologies described with respect to block 306 in the flowchart 300.

At block 1004, the second area is identified in the 3-D image (such as the 3-D image 400). In an exemplary embodiment, the image-processing unit 210 may be adapted to determine the second area in the 3-D image. For example, referring to FIG. 6, the second area 612 is identified in the 3-D image 400. In an exemplary embodiment, the second area in the 3-D image may be representative of the interior of the docked container 102. In an exemplary embodiment, the image-processing unit 210 may utilize the methodologies described with respect to blocks 308 and the block 310 to identify the second area.

At block 1006, the orientation of the one or more sidewalls 128 of the docked container 102 is determined. In an exemplary embodiment, the image-processing unit 210 may be adapted to determine the orientation of the one or more sidewalls 128 of the docked container 102. To determine the orientation of the one or more sidewalls 128 of the docked container 102, the image-processing unit 210 may be adapted to determine the centroid of the regions (such as the regions 502a and 502b) representing the one or more sidewalls 128 of the docked container 102.

At block 1008, the 3-D image of the worksite 100 is counter rotated in accordance with the orientation of each of the one or more sidewalls 128 of the docked container 102. In an exemplary embodiment, the image-processing unit 210 may be adapted to counter rotate the 3-D image. In an exemplary embodiment, the image-processing unit 210 may counter rotate the 3-D image until an absolute value at least one parameter of the orientation of each of the one or more sidewalls 128 is equal. In an exemplary embodiment, the at least one parameter of the orientation may correspond to at least one of a yaw, pitch, and roll.

For example, the 3-D image is counter rotated until absolute value of yaw of a sidewall of the one or more sidewalls 128 of the docked container 102 becomes equal to the absolute value of yaw of the other sidewall of the one or more sidewalls 128 of the docked container 102. For instance, if in the 3-D image, the value of yaw of the sidewall is 40 degrees and the value of the yaw of the other sidewall is -60 degrees. Therefore, the image-processing unit 210 may be adapted to counter rotate the 3-D image by 10 degrees such that the value of yaw of the sidewall is 50 degrees and the value of yaw of the other sidewall is - 50 degrees.

At block 1010, the regions representing the one or more sidewalls 128 (for example the regions 502a and 502b) of the docked container 102 are removed from the 3-D image. In an exemplary embodiment, the image-processing unit 210 may be adapted to remove the regions representing the one or more sidewalls 128 of the docked container 102. Post removal of the regions (for example the regions 502a and 502b) representing the one or more sidewalls 128 of the docked container 102, the second area (representing the interior of the docked container 210) only includes the region representing the floor 124 of the docked container 102 and the regions representing the plurality of articles 120. For example, referring to FIG. 5, after removal of the regions 502a and 502b (representing the one or more sidewalls 128), the 3-D image includes the regions 504 (representing the floor 124) and the region 506 (representing the plurality of articles 120).

Thereafter, at block 1012, a first location of the plurality of articles 120 on the floor 124 of the docked container 102 is determined. In an exemplary embodiment, the image-processing unit 210 may be adapted to determine the first location of the plurality of articles 120 on the floor 124 of the docked container 102. In an exemplary embodiment, the first location of the plurality of articles 120 on the floor 124 of the docked container 102 may be determined based on the depth of the points representing the plurality of articles 120 in the 3-D image (for example the 3-D image 400).

At block 1014, the first navigation path to a second location is determined based on the first location of the plurality of articles 120. In an exemplary embodiment, the navigation unit 212 may be configured to determine the first navigation path. Prior to determining the first navigation path, the navigation unit 212 may be configured to determine the second location. In an exemplary embodiment, the second location may correspond to a location where the material handling apparatus 106 will be positioned to pick at least one of the plurality of articles 120.

To determine the second location, a check is performed to determine whether the first location of the plurality of articles 120 is within a predetermined distance from a junction of the floor 124 of the docked container 102 and the one or more transitional components 104. In an exemplary embodiment, the predetermined distance may correspond to a maximum distance from which the article manipulator 112 can fetch the articles from the plurality of articles 120. If the navigation unit 212 determines that the first location of the plurality of articles 120 is within the predetermined distance from the junction, the navigation unit 212 may be adapted to determine the second location in the first area of the 3-D image. Since the first area represents the exterior of the docked container 106 in the 3-D image, therefore, the second location may lie exterior to the docked container 102. In an exemplary embodiment, the determination of the second location to the exterior (i.e., the first area in the 3-D image) of the docked container 102 is indicative of the plurality of articles 102 being placed near to the one or more doors 122 of the docked container 102. In order to pick the plurality of articles 120 that are placed near to the one or more doors 122 of the docked container 102, the material handling apparatus 106 will position itself exterior to the docked container 106.

However, if the navigation unit 212 determines that the first location of the plurality of articles 120 is not within the predetermined distance from the junction of the one or more transitional components 104 and the floor 124 of the docked container 102, the navigation unit 212 may determine the second location within the interior of the docked container 102 (e.g., within second area 612).

After determining the second location, the navigation unit 212 may be configured to determine the first navigation path to the second location (e.g., from the current location of the material handling apparatus 106). The material handling apparatus 106 may traverse the first navigation path to the second location in order to pick one or more articles of the plurality of articles 120. In an exemplary embodiment, the one or more articles are placed within the predetermined distance from the junction of the floor 124 of the docked container 102 and the one or more transitional components 104.

The disclosed embodiments encompass numerous advantages. The disclosed embodiments, illustrate methods and systems that allow detection of the articles in the exterior of the docked container 102 prior to initiating the operation of the material handling apparatus 106. This allows the system to generate timely notifications that may alert the operator of the material handling apparatus 106 beforehand. Accordingly, the operator may remove the articles before the operation of the material handling apparatus 106 can be started. A person having ordinary skills in the art would appreciate that the scope of the disclosure is not limited to detecting articles in the exterior of the docked container 102. In an exemplary embodiment, other entities such as humans can also be detected exterior to the docked container 102. Further, the disclosed systems and methods describe embodiments where the material handling apparatus 106 itself picks and places the articles in the exterior to the docked container 102. Such an exemplary embodiment ensures that no article (e.g., an article that might have spilled out of the docked container 102 during docking of the container 102 in the worksite 100) is missed by the material handling apparatus 106.

While the disclosure has been described with reference to exemplary embodiments, it will be understood by those skilled in the art that various changes may be made and equivalents may be substituted for elements thereof without departing from the scope of the disclosure. In addition, many modifications may be made to adapt a particular system, device or component thereof to the teachings of the disclosure without departing from the essential scope thereof. Therefore, it is intended that the disclosure not be limited to the particular exemplary embodiments disclosed for carrying out this disclosure, but that the disclosure will include all exemplary embodiments falling within the scope of the appended claims. Moreover, the use of the terms first, second, etc. do not denote any order or importance, but rather the terms first, second, etc. are used to distinguish one element from another.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The description of the present disclosure has been presented for purposes of illustration and description, but is not intended to be exhaustive or limited to the disclosure in the form disclosed. Many modifications and variations will be apparent to those of ordinary skill in the art without departing from the scope of the disclosure. The described exemplary embodiments were chosen and described in order to best explain the principles of the disclosure and the practical application, and to enable others of ordinary skill in the art to understand the disclosure for various exemplary embodiments with various modifications as are suited to the particular use contemplated.

## Claims

1. A method comprising:
defining, by a processor, a first area in a three-dimensional (3-D) image of a worksite comprising a docked container based on an identification of one or more sections of the docked container in the 3-D image, wherein the first area is exterior to the docked container;
identifying, by the processor, a region in the first area representative of an object positioned exterior to the docked container; and
operating, by the processor, a material handling apparatus based on a characteristic associated with the object represented by the region.

2. The method of claim 1, further comprising identifying, by the processor, a first set of regions in the 3-D image representative of at least the one or more sections of the docked container and a plurality of articles placed in the docked container.

3. The method of claim 2, further comprising:
identifying, by the processor, a second set of regions from the first set of regions based on at least an orientation of the first set of regions with respect to the material handling apparatus, wherein the second set of regions are representative of the one or more sections of the material handling apparatus; and
determining, by the processor, a type of each of the one or more sections of the docked container based on at least the orientation of a corresponding region of the second set of regions,
wherein the type of at least one of the one or more sections corresponds to a side wall of the docked container, a floor of the docked container, or a ceiling of the docked container.

4. The method of claim 3, further comprising:
determining, by the processor, at least one region of the second set of regions that is representative of a side wall of the container; and
determining, by the processor, a reference point in the at least one region having a minimum elevation from a ground surface with respect to other points in the at least one region, and a minimum depth with respect to other points in the at least one region, and
wherein the first area is defined based on the determined reference point.

5. The method of claim 2, further comprising determining an orientation and a distance of the one or more sections of the docked container from the material handling apparatus.

6. The method of claim 5, further comprising defining a navigation path ingress to the docked container within the first area based on the determined orientation and the determined distance of the one or more sections of the docked container.

7. The method of claim 1, further comprising determining, by the processor, whether the object corresponds to an article of the plurality of articles.

8. The method of claim 7, further comprising generating, by the processor, a notification based on the determination of the object as the article.

9. The method of claim 7, further comprising halting, by the processor, the operation of the material handling apparatus based on the determination of the object as the article.

10. The method of claim 7, further comprising operating, by the processor, the material handling apparatus to remove the article from the first area, wherein the material handling apparatus picks and places the article at a location in the worksite, wherein the location in the worksite is outside the first area.

11. The method of claim 1, wherein the object comprises a transitional component, wherein the transitional component comprises at least one of a ramp, or a dock leveler.

12. The method of claim 11, further comprising:
determining, by the processor, an orientation of the ramp and the dock leveler with respect to a ground surface, wherein the orientation of the ramp and the dock leveler corresponds to a characteristic associated with the dock leveler and the ramp;
comparing, by the processor, the determined orientation with a predefined range of orientation of the ramp and the dock leveler; and
generating, by the processor, a notification based on the comparison, wherein the notification is indicative of the dock leveler and the ramp being misaligned with the docked container.

13. The method of claim 11, wherein operating the material handling apparatus further comprises:
determining a first location in the first area based on a determination of a second location of a plurality of articles, placed in the docked container, being within a predetermined distance from a junction of the transitional component and the docked container;
navigating the material handling apparatus to the first location; and
operating the material handling apparatus to pick and place one or more articles of the plurality of articles, wherein the one or more articles are placed within the predetermined distance from the junction.

14. The method of claim 1, wherein the handling apparatus comprises:
an article manipulator;
an image-capturing device positioned on the material handling apparatus; and
the processor communicatively coupled to the article manipulator and the image-capturing device.
